(19) **Europäisches Patentamt**
**European Patent Office**
**Office européen des brevets**

(11) **EP 4 281 814 B1**

(12) **EUROPEAN PATENT SPECIFICATION**

(45) Date of publication and mention
of the grant of the patent:
**06.08.2025 Bulletin 2025/32**

(21) Application number: **21709462.2**

(22) Date of filing: **25.01.2021**

(51) International Patent Classification (IPC):
**G01V 1/30** *(2006.01)*

(52) Cooperative Patent Classification (CPC):
**G01V 1/301; G01V 2210/641; G01V 2210/643**

(86) International application number:
**PCT/IB2021/000060**

(87) International publication number:
**WO 2022/157531 (28.07.2022 Gazette 2022/30)**

(54) **METHOD AND SYSTEM FOR PROCESSING SEISMIC IMAGES TO OBTAIN A FREQUENCY-DOMAIN REPRESENTATION OF A GEOLOGICAL FORMATION**

VERFAHREN UND SYSTEM ZUR VERARBEITUNG SEISMISCHER BILDER ZUR DARSTELLUNG EINER GEOLOGISCHEN FORMATION IM FREQUENZBEREICH

PROCÉDÉ ET SYSTÈME DE TRAITEMENT D'IMAGES SISMIQUES POUR OBTENIR UNE REPRÉSENTATION EN DOMAINE FRÉQUENTIEL D'UNE FORMATION GÉOLOGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2023 Bulletin 2023/48**

(73) Proprietor: **TOTALENERGIES ONETECH**
**92400 Courbevoie (FR)**

(72) Inventor: **KESKES, Noomane**
**64018 Pau Cedex (FR)**

(74) Representative: **Plasseraud IP**
**104 Rue de Richelieu**
**CS92104**
**75080 Paris Cedex 02 (FR)**

(56) References cited:
CN-A- 105 717 540        US-A1- 2008 140 319
US-A1- 2008 140 319      US-A1- 2015 285 931
US-A1- 2015 285 931

- **GENG ZHICHENG ET AL: "Deep learning for relative geologic time and seismic horizons", GEOPHYSICS, vol. 85, no. 4, 1 July 2020 (2020-07-01), US, pages WA87 - WA100, XP055849556, ISSN: 0016-8033, DOI: 10.1190/ geo2019-0252.1**
- **TRACY J. STARK: "Generation of a 3D seismic "Wheeler Diagram" from a high resolution Age Volume", SEG TECHNICAL PROGRAM EXPANDED ABSTRACTS 2005, 1 January 2005 (2005-01-01), pages 782 - 785, XP055166791, DOI: 10.1190/1.2148275**
- **HE YAWEN ET AL: "Seismic chronostratigraphy at reservoir scale: Statistical modeling", INTERPRETATION, vol. 3, no. 2, 1 May 2015 (2015-05-01), US, pages SN69 - SN87, XP055849571, ISSN: 2324-8858, DOI: 10.1190/ INT-2014-0136.1**
- **XINMING WU AND DAVE HALE: "Horizon volumes with interpreted constraints", GEOPHYSICS, SOCIETY OF EXPLORATION GEOPHYSICISTS, US, vol. 80, no. 2, 1 March 2015 (2015-03-01), pages IM21 - IM33, XP001594504, ISSN: 0016-8033, [retrieved on 20150202], DOI: 10.1190/GEO2014-0212.1**

- **GENG ZHICHENG ET AL: "Deep learning for relative geologic time and seismic horizons", GEOPHYSICS, vol. 85, no. 4, 1 July 2020 (2020-07-01), US, pages WA87 - WA100, XP055849556, ISSN: 0016-8033, DOI: 10.1190/geo2019-0252.1**
- **TRACY J. STARK: "Generation of a 3D seismic "Wheeler Diagram" from a high resolution Age Volume", SEG TECHNICAL PROGRAM EXPANDED ABSTRACTS 2005, 1 January 2005 (2005-01-01), pages 782 - 785, XP055166791, DOI: 10.1190/1.2148275**
- **HE YAWEN ET AL: "Seismic chronostratigraphy at reservoir scale: Statistical modeling", INTERPRETATION, vol. 3, no. 2, 1 May 2015 (2015-05-01), US, pages SN69 - SN87, XP055849571, ISSN: 2324-8858, DOI: 10.1190/INT-2014-0136.1**
- **XINMING WU AND DAVE HALE: "Horizon volumes with interpreted constraints", GEOPHYSICS, SOCIETY OF EXPLORATION GEOPHYSICISTS, US, vol. 80, no. 2, 1 March 2015 (2015-03-01), pages IM21 - IM33, XP001594504, ISSN: 0016-8033, [retrieved on 20150202], DOI: 10.1190/GEO2014-0212.1**

**Description**

## TECHNICAL FIELD

The present disclosure relates to the processing of seismic images of a geological formation in order to derive information that may be used in the analysis of the geological formation by human interpreters.

## BACKGROUND ART

It is known, especially in oil exploration, to determine the position of oil reservoirs from the results of geophysical measurements carried out from the surface or in well bores.

According to the technology of reflection seismology, these seismic measurements involve emitting a wave (e.g. acoustic waves) into the subsurface and measuring a signal comprising a plurality of echoes of the wave on geological structures being investigated. These structures are typically surfaces separating distinct materials, faults, etc. Other measurements may be carried out at wells bores.

Chrono-stratigraphic analysis (or sequence stratigraphic analysis) is very important to understand basin evolution, predict the sedimentary facies distribution for both hydrocarbon exploration and development. This analysis is based on the fundamental assumption that seismic reflectors are surfaces of chrono-stratigraphic significance. This assumption implies that an individual seismic reflector is a "time-line" through a depositional basin that represents a surface of the same geological age (i.e. an isochronous surface in geological time). For example, document US 2008/0140319 A1 describes an example of such chrono-stratigraphic analysis to process stratigraphic data.

A seismic image (or seismic section) comprises a juxtaposition in a volume of sampled one-dimensional signals referred to as seismic traces. In the seismic image, the value of a pixel (a.k.a. voxel for 3D images) is proportional to the seismic amplitude represented by seismic traces.

Computing a chrono-stratigraphic representation of a seismic image often requires determining seismic horizon surfaces of the seismic image, wherein a seismic horizon surface corresponds to an estimated isochronous surface of the geological formation. Such seismic horizon surfaces can be used to determine a relative geological time, RGT, image of the geological formation, i.e. an image in which each pixel provides an estimated geological age for the portion of the geological formation represented by said pixel. The RGT image is referred to as "relative" because the purpose of the RGT image is mainly to be able to compare the estimated geological ages of different pixels, in order to e.g. identify portions of the geological formation that have the same estimated geological age. Also, in practice, it is usually not possible to estimate an absolute geological age of any given portion of the geological formation. An RGT surface, i.e. a set of points of the RGT image which correspond to pixels having the same estimated geological age in said RGT image, represents also an estimated isochronous surface of the geological formation.

[LOMASK2006] describes a method for determining seismic horizon surfaces based on a seismic image, by computing the local seismic dip at each pixel of the seismic image and searching iteratively for surfaces having local gradients approaching the local seismic dips.

It also known, in order to analyze the geological formation, to perform a frequency-domain conversion of the seismic traces of the seismic image.

More generally speaking, many different types of processing data can be derived from a seismic image, which results in potentially overloading human interpreters since it remains challenging for a human interpreter to identify which processing data carries the most information on the geological information.

## SUMMARY

The present disclosure aims at improving the situation. In particular, the present disclosure aims at overcoming at least some of the limitations of the prior art discussed above, by proposing a solution for automatically providing a human interpreter with a reduced amount of processing data with relevant information, thereby enabling and facilitating the analysis of the geological formation.

According to a first aspect, the present disclosure relates to a computer implemented method for processing a seismic image comprising seismic traces obtained from seismic measurements performed on a geological formation, said method comprising:

- determining an isochronous surface of the geological formation,
- determining an intersection point between each of a plurality of seismic traces and the isochronous surface;
- selecting an interval of pixels of each of the plurality of seismic traces, said interval of pixels being centered on the intersection point;
- converting to frequency-domain the values of each interval of pixels, thereby obtaining a plurality of frequency-domain representations of the isochronous surface associated to respective analysis frequencies;

- computing a histogram of the values of each of a plurality of frequency-domain representations of the isochronous surface;
- selecting a reference frequency-domain representation of the isochronous surface based on the computed histograms;
- displaying the selected reference frequency-domain representation of the isochronous surface to a human interpreter for analyzing the geological formation.

Hence the processing method determines an isochronous surface based on the seismic image. An isochronous surface corresponds to the positions in the seismic image of pixels which represent portions of the geological formation which are considered to have the same geological age.

Then an interval of pixels is selected for each of a plurality of seismic traces (preferably all seismic traces) of the seismic image, centered on the intersection point between the isochronous surface and the corresponding seismic trace, and the values of the intervals of pixels are converted into frequency-domain. Frequency-domain representations of the isochronous surface are therefore obtained for different analysis frequencies.

Hence, the above provisions enable to perform a frequency-domain analysis centered on the isochronous surface, rather than on an arbitrary horizontal surface. Accordingly, this enables to perform a kind of frequency-domain analysis with respect to geological time rather than the acquisition time of the seismic traces composing the seismic image. It should be noted that a horizontal surface in the seismic image (a.k.a. time slice surface) corresponds to a surface having the same acquisition time, while we consider instead an isochronous surface in the seismic image which is a surface having a same geological time, which in most cases will not be horizontal in the seismic image.

Also, in order to reduce the amount of information presented to a human interpreter, a reference frequency-domain representation is preferably selected among all the frequency-domain representations of the isochronous surface. For that purpose, a histogram is computed for each of a plurality of frequency-domain representations. Basically, a frequency-domain representation of the isochronous surface comprises a frequency-domain value for each seismic trace of the seismic image for a given analysis frequency, and a histogram of a frequency-domain representation of the isochronous surface represents the distribution of all the frequency-domain values of the considered frequency-domain representation. Such a histogram may be used to assess the relevance of the information provided by the corresponding frequency-domain representation. For instance, the range of frequency-domain values of the frequency-domain representation may be retrieved as the width of the histogram and used to identify the reference frequency-domain representation as the one having the greatest range of frequency-domain values.

Hence, the amount of processing data displayed to a human interpreter may be reduced by focusing on the reference frequency-domain representation of the isochronous surface, while ensuring that the displayed processing data represents relevant information by focusing on the isochronous surface (i.e. with respect to geological time) and using the histograms of the frequency-domain representations to select the reference frequency-domain representation.

In specific embodiments, the processing method can further comprise one or more of the following features, considered either alone or in any technically possible combination.

In specific embodiments, selecting the reference frequency-domain representation comprises computing a reference width for each histogram, the reference width of a histogram corresponding to the difference between a higher bound and a lower bound of the histogram, the reference frequency-domain representation corresponding to the frequency-domain representation having the greatest reference width.

In specific embodiments, the lower bound of a histogram is determined by discarding a first number of the lowest frequency-domain values of the frequency-domain representation associated to said histogram and/or the higher bound of a histogram is determined by discarding a second number of the highest frequency-domain values of the frequency-domain representation associated to said histogram. Indeed, a frequency-domain representation may comprise isolated highest and/or lowest frequency-domain values, which might increase the range of the frequency-domain values while most of the frequency-domain values (and the information thereof) may be concentrated in a reduced range. Such provisions are therefore advantageous in that isolated highest and/or lowest frequency-domain values, which artificially increase the range, are not considered for computing the reference width.

In specific embodiments, the first number and the second number correspond to respectively $\alpha_1 \times N_{occ}$ and $\alpha_2 \times N_{occ}$, wherein $N_{occ}$ corresponds to the total number of occurrences in the histogram, and $0.01\% \leq \alpha_1, \alpha_2 \leq 1\%$ or $0.05\% \leq \alpha_1, \alpha_2 \leq 0.5\%$.

In specific embodiments, the processing method comprises generating a red-green-blue, RGB, image of the isochronous surface, said RGB image comprising red, green and blue channels, wherein the RGB image is generated based on the reference frequency-domain representation and on two other frequency-domain representations of the isochronous surface obtained for different analysis frequencies. Indeed, RGB images are convenient since they enable to display simultaneously three frequency-domain representations and since human vision is used to analyze such RGB images.

In specific embodiments:

- the green channel of the RGB image corresponds to the reference frequency-domain representation of the isochronous surface;
- the red and blue channels correspond to frequency-domain representations associated to analysis frequencies located on either side of the analysis frequency of the reference frequency-domain representation.

This is advantageous in that human vision is particularly sensitive to green colors, naturally emphasizing the reference frequency-domain representation with respect to the two other frequency-domain representations.

In specific embodiments, the frequency-domain conversion uses a Fourier transform, preferably a Sparse Fourier Transform, SFT.

In specific embodiments, the processing method comprises applying a weighting window to the values of each interval of pixels, said weighting window comprising weighting coefficients having a maximum value at the middle of the weighting window, thereby obtaining weighted values for each interval of pixels, wherein the frequency-domain conversion is performed on the weighted values of the intervals of pixels.

In specific embodiments, the weighting coefficients combine a gaussian-like function with another windowing function, such as a Hamming function.

According to a second aspect, the present disclosure relates to a computer program product comprising instructions which, when executed by at least one processor, configure said at least one processor to carry out a processing method according to any one of the embodiments of the present disclosure.

According to a third aspect, the present disclosure relates to a computer-readable storage medium comprising instructions which, when executed by at least one processor, configure said at least one processor to carry out a processing method according to any one of the embodiments of the present disclosure.

According to a fourth aspect, the present disclosure relates to a computer system for processing a seismic image, said computer system comprising at least one processor configured to carry out a processing method according to any one of the embodiments of the present disclosure.

## BRIEF DESCRIPTION OF DRAWINGS

The invention will be better understood upon reading the following description, given as an example that is in no way limiting, and made in reference to the figures which show:

- Figure 1: an example of seismic image;
- Figure 2: a flow chart illustrating the main steps of a method for processing a seismic image;
- Figure 3: examples of intervals of pixels on seismic traces of a seismic image, to be used for frequency-domain conversion;
- Figure 4: examples of histograms computed for different frequency-domain representations of a same isochronous surface;
- Figure 5: a flow chart illustrating the main steps of a preferred embodiment of the processing method;
- Figure 6: a flow chart illustrating the main steps of a preferred embodiment of the processing method.

In these figures, identical references from one figure to another designate identical or analogous elements. For reasons of clarity, the elements shown are not to scale, unless explicitly stated otherwise.

## DESCRIPTION OF EMBODIMENTS

As discussed above, the present disclosure relates inter alia to a method 30 for processing seismic images.

A seismic image represents a picture of the subsoil arising from a seismic exploration survey. The seismic image comprises at least two dimensions which may comprise at least one horizontal dimension (which usually uses a distance scale, expressed e.g. in meters) and one vertical dimension (which usually uses a distance scale or a time scale, expressed e.g. in seconds). Hence, the seismic image may correspond to a 3D seismic image (with two horizontal dimensions and one vertical dimension) or to a 2D seismic image (with one horizontal dimension and one vertical dimension).

It is emphasized that the expressions "horizontal dimension" and "vertical dimension" are not be interpreted as requiring these dimensions to be respectively strictly horizontal and strictly vertical. These expressions mean that one of the dimensions, referred to as "vertical dimension", is representative of the depth of the geological formation, and that the other dimensions, referred to as "horizontal dimensions" are both orthogonal to the vertical dimension.

The seismic image is composed of pixels which may be 2D in case of a 2D seismic image or 3D (voxels) in case of a 3D seismic image. The pixels are regularly distributed according to a horizontal resolution on each horizontal dimension and a vertical resolution on the vertical dimension. The seismic image comprises, along each horizontal dimension:

- a number of columns of pixels which is equal to the quotient of the horizontal extension along this horizontal dimension divided by the horizontal resolution along this horizontal dimension; each column of the seismic image may be referred to as "seismic trace"; and
- a number of pixels per column which is equal to the quotient of the vertical extension divided by the vertical resolution.

Each pixel is associated with a seismic value which may be a gray value, for instance between 0 and 255 (or 65535). Each seismic value is representative of the amplitude of the seismic signal measured for the portion of the geological formation represented by the corresponding pixel.

In the sequel, a point corresponds to a set of coordinates in the grid of the seismic image, i.e. a set comprising a horizontal position along each horizontal dimension and a vertical position along the vertical dimension. A pixel therefore corresponds to a point with a value associated thereto (i.e. a seismic value in the case of a pixel of the seismic image, an estimated geological age in the case of a pixel of the RGT image, etc.).

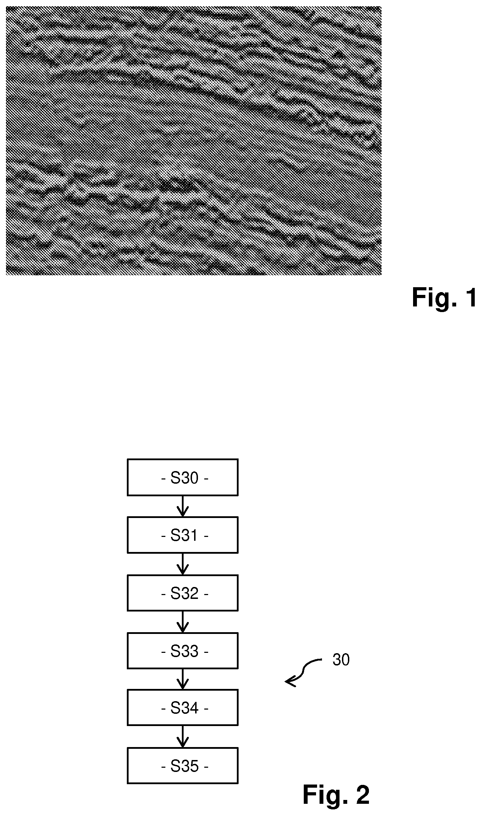

Figure 1 represents an example of seismic image. The seismic image represented by figure 1 is 2D and may correspond to a 2D seismic image or to a 2D section of a 3D seismic image, in a vertical plane comprising one of its horizontal dimensions. As can be seen in figure 1, the seismic values highlight the composition of the geological formation, since high amplitude seismic values are usually associated to strong seismic reflectors, which are usually located at the interfaces between geological layers having different acoustic impedances.

The present disclosure applies for 2D seismic images and for 3D seismic images. In the sequel, we consider in a non-limitative manner the case of a 3D seismic image.

Figure 2 represents schematically the main steps of an exemplary embodiment of a method 30 for processing a seismic image.

The processing method 30 is carried out by a computer system (not represented in the figures). In preferred embodiments, the computer system comprises one or more processors (which may belong to a same computer or to different computers) and storage means (magnetic hard disk, optical disk, electronic memory, or any computer readable storage medium) in which a computer program product is stored, in the form of a set of program-code instructions to be executed in order to implement all or part of the steps of the processing method 30. Alternatively, or in combination thereof, the computer system can comprise one or more programmable logic circuits (FPGA, PLD, etc.), and/or one or more specialized integrated circuits (ASIC), etc., adapted for implementing all or part of said steps of the processing method 30. In other words, the computer system comprises a set of means configured by software (specific computer program product) and/or by hardware (processor, FPGA, PLD, ASIC, etc.) to implement the steps of the processing method 30.

As illustrated by figure 2, the processing method 30 comprises a step S30 of determining an isochronous surface of the geological formation.

As discussed above, an isochronous surface corresponds to the positions in the seismic image of pixels which represent portions of the geological formation which are considered to have the same geological age.

The isochronous surface may be obtained by any suitable means, including identified by a human interpreter and received in step S30 as an input to the processing method 30.

In preferred embodiments, the isochronous surface is determined by the computer system, based on the seismic image.

Seismic horizon surfaces, which may be determined by the computer system by using the method described in [LOMASK2006], in the patent applications EP 20306131.2 or FR 2869693, etc., are examples of isochronous surfaces that may be used in the processing method 30.

Also, such seismic horizon surfaces can be used to determine an RGT image of the geological formation. In an RGT image, each pixel provides an estimated geological age for the portion of the geological formation represented by said pixel. An RGT image may therefore be used to obtain RGT surfaces (see below) which are also examples of isochronous surfaces.

In general, RGT surfaces are more accurate than seismic horizon surfaces, since an RGT image is computed by using a large number of seismic horizon surfaces, thereby mitigating potential inaccuracies of some seismic horizon surfaces. Hence, using an RGT surface for the isochronous surface corresponds to a preferred embodiment of the present disclosure.

In the sequel, we consider in a non-limitative manner that the isochronous surface is an RGT surface retrieved from an RGT image of the geological formation, the RGT image being computed based on the seismic image. However, it is emphasized that the step S30 of determining an isochronous surface of the geological formation may use any method known to the skilled person for determining isochronous surfaces of a geological formation.

We assume that $M_h$ seismic horizon surfaces $\tau^n$ ($1 \leq n \leq M_h$) have been determined by using any method known to the skilled person, for instance the method described in [LOMASK2006], in the patent applications EP 20306131.2 and FR 2869693, etc. The seismic horizon surfaces $\tau^n$ are preferably distributed throughout the vertical dimension of the seismic image. Assuming that the seismic image comprises a horizontal dimension x with $N_x$ pixels, a horizontal dimension y with $N_y$ pixels and a vertical dimension t with $N_t$ pixels, then the seismic horizon surface $\tau^n$ of index n corresponds for instance to the set of points of the seismic image $\{(i,j, \tau^n(i,j)), 1 \leq i \leq N_x, 1 \leq j \leq N_y\}$.

Then the seismic horizon surfaces $\tau^n$ may be used to compute an RGT image of the geological formation.

For example, the value of each pixel of the RGT image may correspond to the number of seismic horizon surfaces that comprise said considered pixel or that comprise any pixel located in the same column as the considered pixel, between the considered pixel and a reference pixel in the same column. The reference pixel on the vertical axis is the pixel of index $k = N_t$ or, preferably, the pixel of index $k = 1$.

For instance, it is possible to compute a stack image *STK*. The value of each pixel of the stack image *STK* corresponds to the number of seismic horizon surfaces that comprise said considered pixel. We can define a function *Pos* (*i, j, k, n*) which is such that:

$$\mathrm{Pos}(i,j,k,n) = \begin{cases} 1 \text{ if } \tau^n(i,j) = k \\ 0 \text{ if } \tau^n(i,j) \neq k \end{cases}$$

Hence, the function *Pos(i, j, k, n)* indicates whether the seismic horizon surface $\tau^n$ passes by the pixel having the position (*i, j, k*). Based on the function *Pos(i, j, k, n)*, the stack image *STK* may be computed as follows:

$$STK(i,j,k) = \sum_{n=1}^{M_h} \mathrm{Pos}(i,j,k,n)$$

for each $1 \leq i \leq N_x$, $1 \leq j \leq N_y$, $1 \leq k \leq N_t$, or limited to the pixels which are located inside a predetermined survey volume in the seismic image.

Then, assuming that the reference pixel is the pixel of index $k = 1$, the RGT image may be computed as follows:

$$RGT(i,j,k) = \sum_{l=1}^{k} STK(i,j,l)$$

for each $1 \leq i \leq N_x$, $1 \leq j \leq N_y$, $1 \leq k \leq N_t$, or limited to the pixels which are located inside the survey volume. For the purpose of chrono-stratigraphic analysis, it is possible, in some embodiments, to normalize the RGT image by a predetermined reference geological age, such that the maximum value of the pixels of the RGT image is equal to the reference geological age.

Then the RGT image may be used to retrieve an RGT surface, i.e. a set of points of the RGT image which correspond to pixels having the same estimated geological age. If we denote by $S^{iso}$ an RGT surface retrieved from the RGT image, then it corresponds to the following set of points of the RGT image:

$$\left\{ \left( i, j, S^{iso}(i,j) \right), 1 \leq i \leq N_x, 1 \leq j \leq N_y \right\}$$

wherein $RGT(i, j, S^{iso}(i,j)) = K^{iso}$ for any (i,j) in the set $\{(i,j), 1 \leq i \leq N_x, 1 \leq j \leq N_y\}$, $K^{iso}$ being the estimated geological age of the RGT surface $S^{iso}$, i.e. the isochronous surface determined during step S30.

As illustrated by figure 2, the processing method 30 comprises a step S31 of determining an intersection point between each of a plurality of seismic traces (preferably all) and the isochronous surface $S^{iso}$. Basically, for the seismic trace (column of the seismic image) having the horizontal positions (i,j), then the intersection point corresponds to the point (*i, j, $S^{iso}(i, j)$*).

As illustrated by figure 2, the processing method 30 comprises a step S32 of selecting an interval of pixels of each considered seismic trace, said interval of pixels being centered on the intersection point. **It** is assumed that all interval of pixels have the same number of pixels $N_{int}$.

We denote by $I_S$ the seismic image, which corresponds to the set of pixels $\{I_S(i,j,k), 1 \leq i \leq N_x, 1 \leq j \leq N_y, 1 \leq k \leq N_t\}$. Hence, if we assume that each interval of pixels comprises $N_{int} = (2 \times N_{int/2})$ pixels, the interval of pixels for the seismic trace having the horizontal positions (i,j), denoted by $IT_{i,j}$, may correspond to the set of pixels:

$$IT_{i,j} = \left\{ I_S\left(i,j,S^{iso}(i,j) - N_{int/2} + k\right), 1 \leq k \leq N_{int} \right\}$$

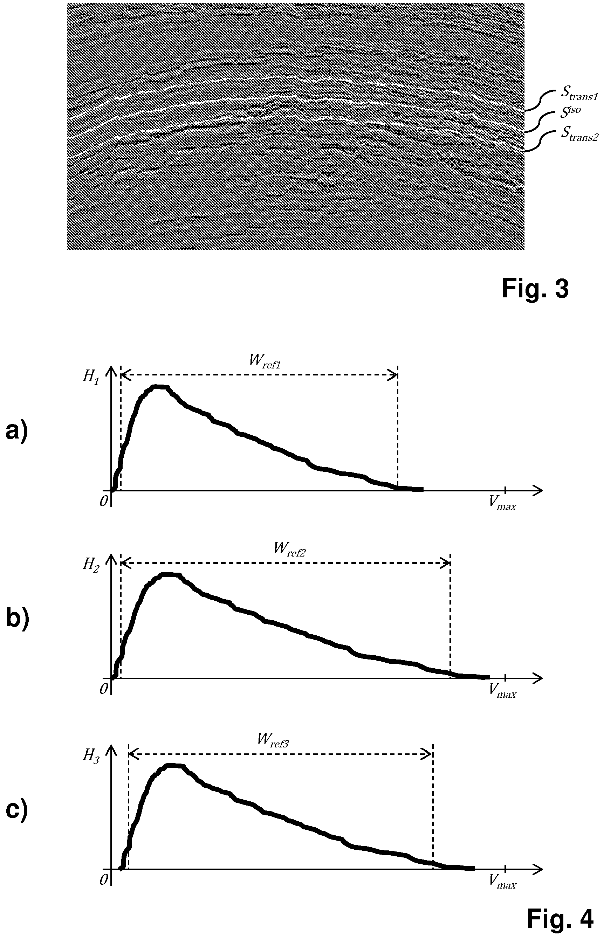

Figure 3 represents schematically a 2D section of a 3D seismic image, in a vertical plane comprising one of its horizontal dimensions. Figure 3 represents also the isochronous surface $S^{iso}$ determined, together with the intervals of pixels centered on said isochronous surface $S^{iso}$. Basically, the intervals of pixels lie between two boundary surfaces $S_{trans1}$ and $S_{trans2}$ obtained by translating the isochronous surface $S^{iso}$ by respectively ($-N_{int/2}$ + 1) and $N_{int/2}$ pixels along the vertical dimension.

As illustrated by figure 2, the processing method 30 comprises a step S33 of converting to frequency-domain the values of each interval of pixels.

This frequency-domain conversion may use any method known to the skilled person, for instance a Fourier transform and preferably a Sparse Fourier Transform, SFT. Hence, a frequency-domain representation is obtained for each interval of pixels, over a plurality of analysis frequencies. For a given analysis frequency, the set of frequency-domain values obtained for all the intervals of pixels corresponds to a frequency-domain representation of the isochronous surface $S^{iso}$. Hence, the frequency-domain conversion step S33 provides a plurality of frequency-domain representations of the isochronous surface $S^{iso}$ associated to respective analysis frequencies.

Basically, for the interval of pixels having the horizontal positions (i,j), the frequency-domain conversion provides a set of frequency-domain values associated to respective analysis frequencies:

$$FC\left(IT_{i,j}\right) = \left\{FV_{i,j}\left(f_p\right), 1 \le p \le N_{freq}\right\}$$

wherein:

- $FC$ is the frequency-domain conversion function, for instance a Fourier transform such as an SFT;
- $N_{freq}$ is the number of analysis frequencies;
- $f_p$ is the analysis frequency of index $p$ ($1 \le p \le N_{freq}$); for instance, the analysis frequencies are separated by a predetermined frequency gap $\delta f$, i.e. ($f_{p+1}$ - $f_p$) = of $\delta f \, \forall 1 \le p \le N_{freq}$ - 1; for instance, with $N_{int}$ = 64 and a seismic sampling rate of 4 milliseconds (vertical resolution), we get $\delta f \approx 3.9$ hertz;
- $FV_{i,j}(f_p)$ is the frequency-domain value obtained for the interval of pixels having the horizontal positions (i,j), for the analysis frequency $f_p$ of index p ($1 \le p \le N_{freq}$).

The frequency-domain representation $FR^{iso}(f_p)$ of the isochronous surface $S^{iso}$ for the analysis frequency $f_p$ corresponds to the following set of frequency-domain values:

$$FR^{iso}\left(f_p\right) = \left\{FV_{i,j}\left(f_p\right), 1 \le i \le N_x, 1 \le j \le N_y\right\}$$

Such frequency-domain representations $FR^{iso}$ are therefore obtained for a plurality of analysis frequencies during step S33.

As illustrated by figure 2, the processing method 30 comprises a step S34 of computing a histogram of the values of each of a plurality of frequency-domain representations of the isochronous surface $S^{iso}$.

Basically, a histogram $H_p$ of a frequency-domain representation $FR^{iso}(f_p)$ of the isochronous surface Sis° represents the distribution of all the frequency-domain values {$FV_{i,j}(f_p)$, $1 \le i \le N_x$, $1 \le j \le N_y$}. For instance, if each histogram $H_p$ is assumed to comprise $N_{hist}$ values defined over a predetermined interval [0, $V_{max}$[, then the histogram value $H_p(h)$, $1 \le h \le N_{hist}$, corresponds for instance to the number of frequency-domain values $FV_{i,j}(f_p)$ of the frequency-domain representation $FR^{iso}(f_p)$, hereinafter referred to as number of occurrences, that are such that:

$$(h - 1) \times V_{max}/N_{hist} \le \left|FV_{i,j}\left(f_p\right)\right| < h \times V_{max}/N_{hist}$$

wherein |x| denotes the norm of x.

Of course, the histogram may also be computed differently, for instance as representing the cumulative distribution of all the frequency-domain values {$FV_{i,j}(f_p)$, $1 \le i \le N_x$, $1 \le j \le N_y$}. Such a histogram, for instance denoted $H'_p$, is for instance computed as:

$$H'_p(h) = \sum_{l=1}^{h} H_p(l)$$

Also, the histograms $H_p$ or $H'_p$ may be normalized, for instance such that $\sum_{h=1}^{N_{hist}} H_p(h) = 1$ (i.e. $H'_p(N_{hist}) = 1$). In the sequel, we consider in a non-limitative manner the case of a histogram as defined by $H_p$.

As illustrated by figure 2, the processing method 30 comprises also a step S35 of selecting a reference frequency-domain representation of the isochronous surface $S^{iso}$ based on the computed histograms.

Basically, the histograms computed may be analyzed to identify a frequency-domain representation of the isochronous surface $S^{iso}$, referred to as reference frequency-domain representation, that is considered to carry the most useful information on the geological formation. The reference frequency-domain representation is then displayed, at least initially, to a human interpreter for analyzing the geological formation.

Different criteria may be used to select the reference frequency-domain representation of the isochronous surface $S^{iso}$ based on the computed histograms, and the choice of a specific criterion corresponds to a specific embodiment of the present disclosure.

For instance, it is possible to compute the mean and/or variance of each histogram, and to select as the reference frequency-domain representation the one associated to the histogram exhibiting the greatest mean and/or variance.

According to another example, it is possible to compute the actual width of each histogram, and to select as the reference frequency-domain representation the one associated to the histogram exhibiting the greatest actual width. For instance, the actual width of a histogram $H_p$ is computed as follows:

$$h_{max} \times V_{max}/N_{hist} - (h_{min} - 1) \times V_{max}/N_{hist}$$

wherein:

- $h_{min}$ is the lowest index for which $H_p(h_{min}) \neq 0$ (i.e. $H_p(h) = 0$ for any $h < h_{min}$, if $h_{min} \neq 1$);
- $h_{max}$ is the highest index for which $H_p(h_{max}) \neq 0$ (i.e. $H_p(h) = 0$ for any $h > h_{max}$, if $h_{max} \neq N_{hist}$).

More generally, it is possible to compute a reference width of each histogram, and to select as the reference frequency-domain representation the one associated to the histogram exhibiting the greatest reference width. The reference width of a histogram corresponds to the difference between a higher bound and a lower bound of the histogram.

For instance, the higher bound may be $h_{max} \times V_{max}/N_{hist}$ and the lower bound may be $(h_{min} - 1) \times V_{max}/N_{hist}$, in which case the reference width corresponds to the actual width discussed above.

In preferred embodiments, the reference width is computed by discarding some of the lowest and/or some of the highest frequency-domain values of the histogram, which may be isolated in some cases, thereby artificially increasing the actual width of the histogram.

For instance, it is possible to discard the value $H_p(h_{min})$ and/or the value $H_p(h_{max})$. In such a case, the reference width may be computed as follows:

$$(h_{max} - 1) \times V_{max}/N_{hist} - (h_{min}) \times V_{max}/N_{hist}$$

More generally, it is possible, in some examples, to discard a predetermined number L of histogram values, in which case the reference width may be computed as follows:

$$(h_{max} - L) \times V_{max}/N_{hist} - (h_{min} - 1 + L) \times V_{max}/N_{hist}$$

In preferred embodiments, the lower bound corresponds to the highest value below which a number of occurrences in the histogram is lower than a predetermined first threshold and/or the higher bound corresponds to the lowest value above which a number of occurrences in the histogram is lower than a predetermined second threshold. For instance, the first threshold and the second threshold may be defined as respectively $\alpha_1 \times N_{occ}$ and $\alpha_2 \times N_{occ}$, wherein $N_{occ}$ corresponds to the total number of occurrences in the histogram, i.e. the total number of frequency-domain values $FV_{i,j}(f_p)$ considered for computing the histogram $H_p$. Hence, $N_{occ} = N_x \times N_y$ if the frequency-domain conversion is performed on all seismic traces.

Assuming that both the first threshold and the second threshold are used, and that the histogram $H_p$ is not normalized (i.e. $\sum_{h=1}^{N_{hist}} H_p(h) = N_{occ}$), then the reference width of a histogram $H_p$ may be computed as follows:

$$h_{\alpha_2} \times V_{max}/N_{hist} - \left(h_{\alpha_1} - 1\right) \times V_{max}/N_{hist}$$

wherein:

- $h_{\alpha_1}$ is the highest index for which $\sum_{h=1}^{h_{\alpha_1}-1} H_p(h) \leq \alpha_1 \times N_{occ}$, i.e. $\sum_{h=1}^{h_{\alpha_1}} H_p(h) > \alpha_1 \times N_{occ}$;

- $h_{\alpha_2}$ is the lowest index for which $\sum_{h_{\alpha_2}+1}^{N_{hist}} H_p(h) \leq \alpha_2 \times N_{occ}$, i.e.

$$\sum_{h_{\alpha_2}}^{N_{hist}} H_p(h) > \alpha_2 \times N_{occ}.$$

Basically, this corresponds to computing the reference width of the histogram $H_p$ by discarding the $\alpha_1 \times N_{occ}$ lowest frequency-domain values $FV_{i,j}(f_p)$ of the frequency-domain representation $FR^{iso}(f_p)$ and by discarding the $\alpha_2 \times N_{occ}$ highest frequency-domain values $FV_{i,j}(f_p)$ of the frequency-domain representation $FR^{iso}(f_p)$.

Preferably, $0.01\% \leq \alpha_1, \alpha_2 \leq 1\%$ or $0.05\% \leq \alpha_1, \alpha_2 \leq 0.5\%$. In some embodiments, $\alpha_1$ and $\alpha_2$ may be equal, for instance $\alpha_1 = \alpha_2 = 0.1\%$.

Figure 4 represents schematically three different histograms. More specifically, part a) of figure 4 represents a histogram $H_1$ computed for a frequency-domain representation $FR^{iso}(f_1)$. Part b) of figure 4 represents a histogram $H_2$ computed for a frequency-domain representation $FR^{iso}(f_2)$. Part c) of figure 4 represents a histogram $H_3$ computed for a frequency-domain representation $FR^{iso}(f_3)$. Figure 4 represents also the lower and higher bounds obtained by considering $\alpha_1 = \alpha_2 = 0.1\%$, and the corresponding reference widths referred to as $W_{ref1}$, $W_{ref2}$ and $W_{ref3}$. As can be seen in figure 4, the histogram $H_2$ is the one exhibiting the greatest reference width such that, in this example, the frequency-domain representation $FR^{iso}(f_2)$ may be selected as the reference frequency-domain representation of the isochronous surface $S^{iso}$.

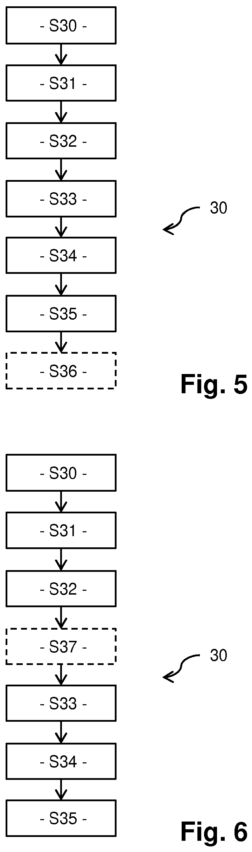

Figure 5 represents schematically the main steps of a preferred embodiment of the processing method 30. As illustrated by figure 5, the processing method 30 comprises, in addition to the steps described in reference to figure 2, a step S36 of generating a red-green-blue, RGB, image of the isochronous surface $S^{iso}$ based on at least the reference frequency-domain representation of said isochronous surface $S^{iso}$.

For instance, the RGB image, which comprises red, green and blue channels, may be generated based on the reference frequency-domain representation and based on two frequency-domain representations of the isochronous surface $S^{iso}$ selected among the other frequency-domain representations of the isochronous surface $S^{iso}$. For instance, each channel of the RGB image may correspond to one of these three frequency-domain representations of the isochronous surface $S^{iso}$. Preferably, the green channel of the RGB image corresponds to the reference frequency-domain representation of the isochronous surface and the red and blue channels correspond to frequency-domain representations associated to analysis frequencies located on either side of the analysis frequency of the reference frequency-domain representation. Hence, if we denote by $f_{ref}$ the analysis frequency of the reference frequency-domain representation $FR^{iso}(f_{ref})$ of the isochronous surface $S^{iso}$, and by $f_{aux1}$ and $f_{aux2}$ the analysis frequencies of the two other selected frequency-domain representations $FR^{iso}(f_{aux1})$ and $FR^{iso}(f_{aux2})$, with $f_{aux1} < f_{ref} < f_{aux2}$, then:

- the red channel may display the frequency-domain representation $FR^{iso}(f_{aux1})$;
- the green channel may display the reference frequency-domain representation $FR^{iso}(f_{ref})$;
- the blue channel may display the frequency-domain representation $FR^{iso}(f_{aux2})$.

For instance, the frequency-domain representations $FR^{iso}(f_{aux1})$ and $FR^{iso}(f_{aux2})$ may be selected based on the histograms computed. According to another example, the analysis frequencies $f_{aux1}$ and $f_{aux2}$ may be selected based on the analysis frequency $f_{ref}$. For instance, these analysis frequencies may be selected such that $(f_{ref} - f_{aux1}) = (f_{aux2} - f_{ref}) = \Delta f$, wherein $\Delta f$ is a predetermined frequency distance. For instance, $\Delta f = K \times \delta f$ wherein $K$ is a predetermined integer factor. K is for instance lower or equal than 5.

Figure 6 represents schematically the main steps of a preferred embodiment of the processing method 30. As illustrated by figure 6, the processing method 30 comprises, in addition to the steps described in reference to figure 2 and prior to performing the frequency-domain conversion, a step S37 of applying a weighting window to the values of each interval of pixels, thereby obtaining weighted values for each interval of pixels. The frequency-domain conversion is performed on the weighted values of the intervals of pixels.

Basically, the weighting window comprises weighting coefficients having a maximum value at the middle of the weighting window, in order to focus the frequency-domain analysis around the isochronous surface $S^{iso}$.

In preferred embodiments, the weighting coefficients are computed based on a Gaussian-like function centered on the middle of the weighting window. A Gaussian-like function is for instance given by the following expression:

$$GF(k) = A \times \exp\left(-\left|k - N_{int/2}\right|^{\alpha}\right)$$

wherein $A$ is a predetermined strictly positive factor, $\alpha$ is a predetermined strictly positive factor and $1 \le k \le N_{int}$. For instance, $0.5 \le \alpha \le 3$.

Preferably, the weighting coefficients are computed by combining a Gaussian-like function with another windowing function (rectangular, triangular, Han, Hamming, etc.). In a preferred example, the other windowing function is a Hamming function, in which case the weighting coefficients $WC(k)$, $1 \le k \le N_{int}$, are for instance given by:

$$WC(k) = B \times GF(k) \times \text{Hamming}(k)$$

wherein B is a predetermined strictly positive factor and Hamming(k), $1 \le k \le N_{int}$, is for instance given by:

$$\text{Hamming}(k) = 0.54 - 0.46 \times \cos(2 \times \pi \times k / N_{int})$$

Applying the weighting window to the values of each interval of pixels provides weighted intervals of pixels $WIT_{i,j}$ on which the frequency domain conversion may be performed:

$$WIT_{i,j} = \left\{ WC(k) \times I_S\left(i, j, S^{iso}(i,j) - N_{int/2} + k\right), 1 \le k \le N_{int} \right\}$$

## REFERENCES

[LOMASK2006] Lomask, et al.: "Flattening without picking" Geophysics Volume 71 Issue 4 (July-August 2006), Pages 13-20.

## Claims

1. - Computer implemented method (30) for processing a seismic image comprising seismic traces obtained from seismic measurements performed on a geological formation, said method comprising:

   - (S30) determining an isochronous surface of the geological formation;
   - (S31) determining an intersection point between each of a plurality of seismic traces and the isochronous surface;
   - (S32) selecting an interval of pixels of each of the plurality of seismic traces, said interval of pixels being centered on the intersection point;

   said method being **characterized by**:

   - (S33) converting to frequency-domain the values of each interval of pixels, thereby obtaining a plurality of frequency-domain representations of the isochronous surface associated to respective analysis frequencies;
   - (S34) computing a histogram of the values of each of a plurality frequency-domain representations of the isochronous surface;
   - (S35) selecting a reference frequency-domain representation of the isochronous surface based on the computed histograms,
   - displaying the selected reference frequency-domain representation of the isochronous surface to a human interpreter for analyzing the geological formation.

2. - Method (30) according to claim 1, wherein selecting the reference frequency-domain representation comprises computing a reference width for each histogram, the reference width of a histogram corresponding to the difference between a higher bound and a lower bound of the histogram, the reference frequency-domain representation corresponding to the frequency-domain representation having the greatest reference width.

3. - Method (30) according to claim 2, wherein the lower bound of a histogram is determined by discarding a first number of the lowest frequency-domain values of the frequency-domain representation associated to said histogram and/or the higher bound of a histogram is determined by discarding a second number of the highest frequency-domain values of the frequency-domain representation associated to said histogram.

4. - Method (30) according to claim 3, wherein the first number and the second number correspond to respectively $\alpha_1 \times N_{occ}$ and $\alpha_2 \times N_{occ}$, wherein $N_{occ}$ corresponds to the total number of occurrences in the histogram, and $0.01\% \le \alpha_1, \alpha_2 \le 1\%$ or $0.05\% \le \alpha_1, \alpha_2 \le 0.5\%$.

5. - Method (30) according to any one of the preceding claims, comprising (S36) generating a red-green-blue, RGB, image of the isochronous surface, said RGB image comprising red, green and blue channels, wherein the RGB image is generated based on the reference frequency-domain representation and on two other frequency-domain representations of the isochronous surface obtained for different analysis frequencies.

6. - Method (30) according to claim 5, wherein:

   - the green channel corresponds to the reference frequency-domain representation of the isochronous surface;
   - the red and blue channels correspond to frequency-domain representations associated to analysis frequencies located on either side of the analysis frequency of the reference frequency-domain representation.

7. - Method (30) according to any one of the preceding claims, wherein the frequency-domain conversion uses a Fourier transform, preferably a Sparse Fourier Transform, SFT.

8. - Method (30) according to any one of the preceding claims, comprising (S37) applying a weighting window to the values of each interval of pixels, said weighting window comprising weighting coefficients having a maximum value at the middle of the weighting window, thereby obtaining weighted values for each interval of pixels, wherein the frequency-domain conversion is performed on the weighted values of the intervals of pixels.

9. - Method (30) according to claim 8, wherein the weighting coefficients combine a gaussian-like function with another windowing function.

10. - Computer program product comprising instructions which, when executed by at least one processor, configure said at least one processor to carry out a processing method according to any one of the preceding claims.

11. - Computer-readable storage medium comprising instructions which, when executed by at least one processor, configure said at least one processor to carry out a processing method according to any one of claims 1 to 9.

12. - Computer system for processing a seismic image, said computer system comprising at least one processor configured to carry out a processing method according to any one of claims 1 to 9.

**Patentansprüche**

1. Computerimplementiertes Verfahren (30) zum Verarbeiten eines seismischen Bildes, das seismische Spuren umfasst, die aus seismischen Messungen erhalten werden, die an einer geologischen Formation durchgeführt werden, das Verfahren umfassend:

   - (S30) Bestimmen einer isochronen Oberfläche der geologischen Formation;
   - (S31) Bestimmen eines Schnittpunkts zwischen jeder einer Vielzahl von seismischen Spuren und der isochronen Oberfläche;
   - (S32) Auswählen eines Intervalls von Pixeln von jeder der Vielzahl von seismischen Spuren, wobei das Intervall von Pixeln an dem Schnittpunkt zentriert ist;

   wobei das Verfahren durch Folgendes gekennzeichnet ist:

   - (S33) Umwandeln der Werte jedes Intervalls von Pixeln in eine Frequenzdomäne, dadurch Erhalten einer Vielzahl von Frequenzdomänen-Darstellungen der isochronen Oberfläche, die den jeweiligen Analysefrequenzen zugehörig sind;
   - (S34) Berechnen eines Histogramms der Werte jeder einer Vielzahl von Frequenzdomänen-Darstellungen der isochronen Oberfläche;

- (S35) Auswählen einer Referenzfrequenzdomänen-Darstellung der isochronen Oberfläche auf Basis der berechneten Histogramme,
- Anzeigen der ausgewählten Referenzfrequenzdomänen-Darstellung der isochronen Oberfläche gegenüber einem menschlichen Auswerter zum Analysieren der geologischen Formation.

2. Verfahren (30) nach Anspruch 1, wobei das Auswählen der Referenzfrequenzdomänen-Darstellung das Berechnen einer Referenzbreite für jedes Histogramm umfasst, wobei die Referenzbreite eines Histogramms der Differenz zwischen einer oberen Grenze und einer unteren Grenze des Histogramms entspricht, wobei die Referenzfrequenzdomänen-Darstellung der Frequenzdomänen-Darstellung entspricht, die die größte Referenzbreite aufweist.

3. Verfahren (30) nach Anspruch 2, wobei die untere Grenze eines Histogramms durch Verwerfen einer ersten Anzahl der untersten Frequenzdomänen-Werte der Frequenzdomänen-Darstellung, die dem Histogramm zugehörig ist, bestimmt wird, und/ oder die obere Grenze eines Histogramms durch Verwerfen einer zweiten Anzahl der höchsten Frequenzdomänen-Werte der Frequenzdomänen-Darstellung, die dem Histogramm zugehörig ist, bestimmt wird.

4. Verfahren (30) nach Anspruch 3, wobei die erste Anzahl und die zweite Anzahl jeweils $\alpha_1 \times N_{occ}$ und $\alpha_2 \times N_{occ}$ entsprechen, wobei $N_{occ}$ der Gesamtanzahl von Ereignissen in dem Histogramm entspricht, und $0,01\% \leq \alpha_1, \alpha_2 \leq 1\%$ oder $0,05\% \leq \alpha_1, \alpha_2 \leq 0,5\%$.

5. Verfahren (30) nach einem der vorhergehenden Ansprüche, umfassend (S36) Erzeugen eines Rot-Grün-Blau, RGB, -Bildes der isochronen Oberfläche, wobei das RGB-Bild rote, grüne und blaue Kanäle umfasst, wobei das RGB-Bild basierend auf der Referenzfrequenzdomänen-Darstellung und auf zwei anderen Frequenzdomänen-Darstellungen der isochronen Oberfläche erzeugt wird, die für unterschiedliche Analysefrequenzen erhalten werden.

6. Verfahren (30) nach Anspruch 5, wobei:

   - der grüne Kanal einer Referenzfrequenzdomänen-Darstellung der isochronen Oberfläche entspricht;
   - die roten und blauen Kanäle Frequenzdomänen-Darstellungen entsprechen, die Analysefrequenzen zugehörig sind, die sich auf jeder Seite der Analysefrequenz der Referenzfrequenzdomänen-Darstellung befinden.

7. Verfahren (30) nach einem der vorhergehenden Ansprüche, wobei die Frequenzdomänen-Umwandlung eine Fourier-Transformation, bevorzugt eine Sparse-Fourier-Transformation, SFT, verwendet.

8. Verfahren (30) nach einem der vorhergehenden Ansprüche, umfassend (S37) Anwenden eines Gewichtungsfensters auf die Werte jedes Intervalls von Pixeln, wobei das Gewichtungsfenster Gewichtungskoeffizienten umfasst, die einen Maximalwert in der Mitte des Gewichtungsfensters aufweisen, dadurch Erhalten von gewichteten Werten für jedes Intervall von Pixeln, wobei die Frequenzdomänen-Umwandlung an den gewichteten Werten der Intervalle von Pixeln durchgeführt wird.

9. Verfahren (30) nach Anspruch 8, wobei der Gewichtungskoeffizient eine gaußartige Funktion mit einer anderen Fensterfunktion kombiniert.

10. Computerprogrammprodukt, das Anweisungen umfasst, die bei ihrer Ausführung durch mindestens einen Prozessor den mindestens einen Prozessor dazu konfigurieren, ein Verarbeitungsverfahren nach einem der vorhergehenden Ansprüche durchzuführen.

11. Computerlesbares Speichermedium, das Anweisungen umfasst, die bei ihrer Ausführung durch mindestens einen Prozessor den mindestens einen Prozessor dazu konfigurieren, ein Verarbeitungsverfahren nach einem der Ansprüche 1 bis 9 durchzuführen.

12. Computersystem zum Verarbeiten eines seismischen Bildes, wobei das Computersystem mindestens einen Prozessor umfasst, der dazu konfiguriert ist, ein Verarbeitungsverfahren nach einem der Ansprüche 1 bis 9 durchzuführen.

**Revendications**

1. - Méthode mise en œuvre par ordinateur (30) pour le traitement d'une image sismique comprenant des traces sismiques obtenues à partir de mesures sismiques effectuées sur une formation géologique, ladite méthode comprenant :

- (S30) la détermination d'une surface isochrone de la formation géologique ;
- (S31) la détermination d'un point d'intersection entre chacune d'une pluralité de traces sismiques et la surface isochrone ;
- (S32) la sélection d'un intervalle de pixels de chacune de la pluralité de traces sismiques, ledit intervalle de pixels étant centré sur le point d'intersection ;

ladite méthode étant **caractérisée par** :

- (S33) la conversion dans le domaine fréquentiel des valeurs de chaque intervalle de pixels, obtenant ainsi une pluralité de représentations dans le domaine fréquentiel de la surface isochrone associées à des fréquences d'analyse respectives ;
- (S34) le calcul d'un histogramme des valeurs de chacune d'une pluralité de représentations dans le domaine fréquentiel de la surface isochrone ;
- (S35) la sélection d'une représentation dans le domaine fréquentiel de référence de la surface isochrone sur la base des histogrammes calculés,
- l'affichage de la représentation dans le domaine fréquentiel de référence sélectionnée de la surface isochrone à un interprète humain pour l'analyse de la formation géologique.

2. - Méthode (30) selon la revendication 1, dans laquelle la sélection de la représentation dans le domaine fréquentiel de référence comprend le calcul d'une largeur de référence pour chaque histogramme, la largeur de référence d'un histogramme correspondant à la différence entre une borne supérieure et une borne inférieure de l'histogramme, la représentation dans le domaine fréquentiel de référence correspondant à la représentation dans le domaine fréquentiel ayant la plus grande largeur de référence.

3. - Méthode (30) selon la revendication 2, dans laquelle la borne inférieure d'un histogramme est déterminée en éliminant un premier nombre parmi les plus faibles valeurs dans le domaine fréquentiel de la représentation dans le domaine fréquentiel associée audit histogramme et/ou la borne supérieure d'un histogramme est déterminée en éliminant un deuxième nombre des plus fortes valeurs dans le domaine fréquentiel de la représentation dans le domaine fréquentiel associée audit histogramme.

4. - Méthode (30) selon la revendication 3, dans laquelle le premier nombre et le deuxième nombre correspondent respectivement à $\alpha_1 \times N_{occ}$ et $\alpha_2 \times N_{occ}$, dans laquelle $N_{occ}$ correspond au nombre total d'occurrences dans l'histogramme, et $0.01\% \leq \alpha_1, \alpha_2 \leq 1\%$ ou $0.05\% \leq \alpha_1, \alpha_2 \leq 0.5\%$.

5. - Méthode (30) selon l'une quelconque des revendications précédentes, comprenant (S36) la génération d'une image rouge-vert-bleu, RVB, de la surface isochrone, ladite image RVB comprenant des canaux rouge, vert et bleu, dans laquelle l'image RVB est générée sur la base de la représentation dans le domaine fréquentiel de référence et de deux autres représentations dans le domaine fréquentiel de la surface isochrone obtenues pour différentes fréquences d'analyse.

6. - Méthode (30) selon la revendication 5, dans laquelle :

- le canal vert correspond à la représentation dans le domaine fréquentiel de référence de la surface isochrone ;
- les canaux rouge et bleu correspondent à des représentations dans le domaine fréquentiel associées à des fréquences d'analyse situées de part et d'autre de la fréquence d'analyse de la représentation dans le domaine fréquentiel de référence.

7. - Méthode (30) selon l'une quelconque des revendications précédentes, dans laquelle la conversion dans le domaine fréquentiel utilise une transformée de Fourier, de préférence une transformée de Fourier parcimonieuse (Sparse Fourier Transform), SFT.

8. - Méthode (30) selon l'une quelconque des revendications précédentes, comprenant (S37) l'application d'une fenêtre de pondération aux valeurs de chaque intervalle de pixels, ladite fenêtre de pondération comprenant des coefficients de pondération ayant une valeur maximale au centre de la fenêtre de pondération, obtenant ainsi des valeurs pondérées pour chaque intervalle de pixels, dans laquelle la conversion dans le domaine fréquentiel est effectuée sur les valeurs pondérées des intervalles de pixels.

9. - Méthode (30) selon la revendication 8, dans laquelle les coefficients de pondération combinent une fonction de type gaussien avec une autre fonction de fenêtrage.

10. - Produit de programme informatique comprenant des instructions qui, lorsqu'elles sont exécutées par au moins un processeur, configurent ledit au moins un processeur pour réaliser une méthode de traitement selon l'une quelconque des revendications précédentes.

11. - Support de stockage lisible par ordinateur comprenant des instructions qui, lorsqu'elles sont exécutées par au moins un processeur, configurent ledit au moins un processeur pour réaliser une méthode de traitement selon l'une quelconque des revendications 1 à 9.

12. - Système informatique pour le traitement d'une image sismique, ledit système informatique comprenant au moins un processeur configuré pour réaliser une méthode de traitement selon l'une quelconque des revendications 1 à 9.

**Fig. 1**

**Fig. 2**

**Fig. 3**

**Fig. 4**

- S30 -

- S31 -

- S32 -

- S33 -

30

- S34 -

- S35 -

- S36 -

**Fig. 5**

- S30 -

- S31 -

- S32 -

- S37 -

30

- S33 -

- S34 -

- S35 -

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080140319 A1
- EP 20306131
- FR 2869693

### Non-patent literature cited in the description

- **LOMASK et al.** Flattening without picking. *Geophysics*, July 2006, vol. 71 (4), 13-20